# EUROPEAN PATENT APPLICATION

(11) **EP 4 844 588 A1**
(43) Date of publication of application: **25.11.2026**
(21) Application number: 26178972.1
(22) Date of filing: 15.05.2026
(51) Int. Cl.: G06F 11/14, G06F 11/30, G06F 11/07, G06F 11/1479

(54) **COMPUTER SYSTEM AND A METHOD THEREIN FOR HANDLING AN ORCHESTRATED SOFTWARE ENVIRONMENT**

(30) Priority: 19.05.2025 SE 2550490
(71) Applicant: Bruhnbruhn Innovation AB, 753 20 Uppsala (SE)
(72) Inventor: Petrik, Slavomir, 723 55 Västerås (SE); Solman Andersson, Alexander, 753 24 Uppsala (SE)
(74) Representative: Valea AB

(57) **Abstract**

A method performed by a computer system comprised in a spacecraft for handling an orchestrated software environment is provided. The computer system monitors (201) the orchestrated software environment and evaluates (202) a correctness of execution of the orchestrated software environment. When the orchestrated software environment has executed incorrectly by more than a set threshold, the computer system triggers (204) a restart of at least part of the orchestrated software environment and/or at least part of the computer system.

## Description

### TECHNICAL FIELD

The disclosure relates to a computer system and a method therein for handling an orchestrated software environment. In particular, the computer system is comprised in a spacecraft, which spacecraft is also provided by the disclosure. Additionally, a computer program and a computer program medium are also provided by the disclosure.

### BACKGROUND

Spacecrafts are often controlled by a number of different software applications executing in a computer system as part of an orchestrated software environment in different virtual containers. When operating in harsh environments as space, spacecrafts may be subject to space radiation, such as solar radiation. Space radiation often has transient and/or permanent effects on computer systems and their orchestrated software environments. For example, the space radiation may cause a plurality of transistors of memory, or other circuitry to change state of the orchestrated software environments which risk leading to an error due to incorrect execution of software. When an error occurs due to space radiation, data may be changed, applications may behave in an unexpected manner, and/or control of the spacecraft may be affected or lost, thereby leading to inefficient use of the spacecraft.

Hence, there is a need to improve handling of an orchestrated software environment of a spacecraft computer system.

### SUMMARY

As part of developing embodiments herein, it has been identified that to avoid some problems associated with radiation-related errors occurring in orchestrated software environment of spacecrafts can be solved by each virtual container of the environment being configured to periodically restart its respective software to a set state. However, such an approach may lose data, may cause downtime, and/or may still risk executing software with errors for an extended period of time which may be unnecessary if there are no errors or if the errors are minor. Furthermore, if there are errors which extend beyond a single container and software application, the errors may remain unsolved and may grow larger, thereby risking obtaining corrupt data and may risk losing control of at least part of the spacecraft.

An object herein is to improve handling of an orchestrated software environment of a spacecraft computer system.

According to a first aspect of the disclosure, a method performed by a computer system comprised in a spacecraft for handling an orchestrated software environment. The computer system monitors the orchestrated software environment and evaluates a correctness of execution of the orchestrated software environment. When the orchestrated software environment has executed incorrectly by more than a set threshold, the computer system triggers a restart of at least part of the orchestrated software environment and/or at least part of the computer system.

According to a second aspect of the disclosure a computer system comprised in a spacecraft is provided. The computer system is configured to handle an orchestrated software environment. The computer system is configured to monitor the orchestrated software environment. The computer system is configured to evaluate a correctness of execution of the orchestrated software environment. The computer system is configured to, when the orchestrated software environment has executed incorrectly by more than a set threshold, trigger a restart of at least part of the orchestrated software environment and/or at least part of the computer system. In particular, the computer system may be configured to perform the method according to the first aspect.

According to a third aspect of the disclosure a computer program is provided. The computer program comprises instructions which, when the program is executed by a computer system, cause the computer system to carry out the method according to the first aspect.

According to a fourth aspect of the disclosure, a computer-readable storage medium is provided. The computer-readable storage medium comprises instructions which, when executed by a computer system, cause the computer system to carry out the method according to the first aspect.

According to a fifth aspect of the disclosure, a spacecraft is provided. The spacecraft comprises the computer system according to the second aspect.

Since at least part of the orchestrated software environment and/or the computer system are restarted after monitoring more than the set threshold of incorrect execution, improved handling of the orchestrated software environment is achieved. This is since it can be ensured that the orchestrated software environment does not continue to execute incorrectly when major problems occur, i.e., when more than the set threshold of incorrect execution is monitored. In particular, by restarting the suitable parts of the computer system and/or the orchestrated software system, any errors which may relate to major problems of the computer system and/or the orchestrated software system can be avoided, and thereby a more efficient usage of the spacecraft is attained.

### BRIEF DESCRIPTION OF THE DRAWINGS

Examples are described in more detail below with reference to the appended drawings.
- **FIG. 1**: illustrates an example of a spacecraft and a computer system according to some embodiments.
- **FIG. 2**: illustrates a flow chart of a method according to some embodiments.
- **FIG. 3**: illustrates an example scenario.
- **FIG. 4**: illustrates an example scenario.
- **FIG. 5**: illustrates an example of a computer system according to some embodiments.

### DETAILED DESCRIPTION

Embodiments here relates to monitoring correctness of execution of an orchestrated software environment or software therein as part of a computer system comprised in a spacecraft. When incorrect execution has happened repeatedly, the computer system and/or the orchestrated software environment is restarted to ensure correct execution. It is also possible to restart single containers of the orchestrated software environment. As used herein, orchestrated software environment may mean a software execution environment in which each user application, or bundles or user applications, execute in the isolated units, usually called virtual containers or containers. The containers may be sandboxed environments that should be able to executed without interfering with each other and may typically be able to be restarted from a set state. The orchestrated software environment may be controlled by one or more control elements, such as an orchestration control element. An orchestration control element as used herein may mean a software that controls the execution of the isolated software execution unit (containers).

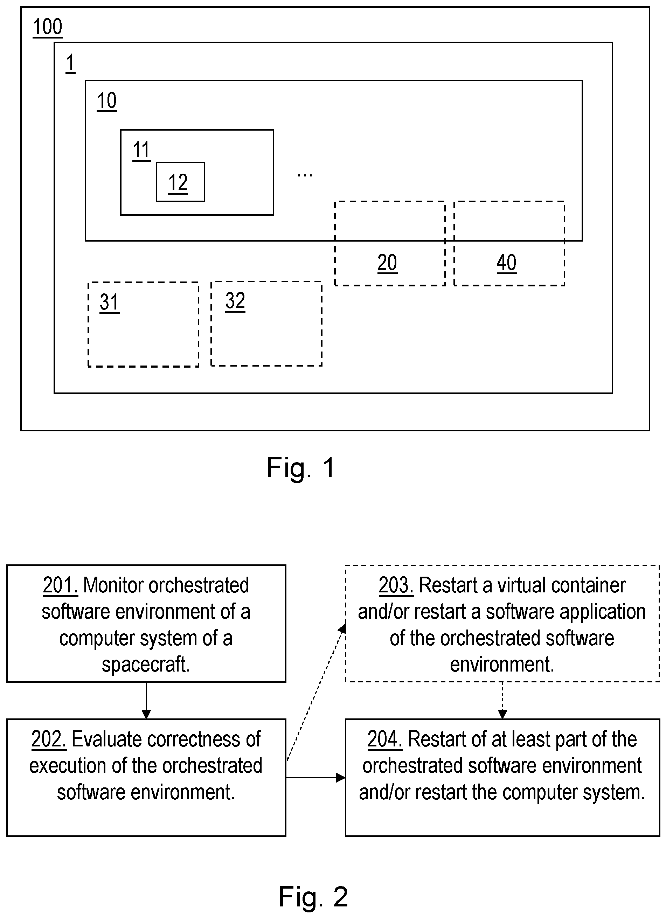

**FIG. 1** illustrates a a **spacecraft 100.** The spacecraft may be any suitable spacecraft such as a satellite, a rocket, or a space station.

FIG. 1 further illustrates a **computer system 1.** The computer system 1 is comprised in the spacecraft 100. The computer system 1 may be used for any suitable purpose, such as any one or more of: controlling the spacecraft 100, performing measurements, performing analyses of measurements, diagnostics of the spacecraft 100, and handling communications of the spacecraft 100. In particular, the computer system 1 may be configured to execute an **orchestrated software environment 10.** The orchestrated software environment 10 may also be referred to as an orchestrated environment 10.

The orchestrated software environment 10 may comprise one or more virtual containers such as a **virtual container 11.** Only one container is illustrated in FIG. 1, but typically multiple containers may be used.

The orchestrated software environment 10 may comprise one or more software applications, e.g., executed by the computer system 1 and the orchestrated software environment 10 as part of the one or more virtual containers. In particular, the one or more software applications may comprise a **software application 12,** executing as part of the virtual container 11. The software application 12 may be a user software, i.e., executing in user-space. Only one software application is illustrated in FIG. 1, but typically multiple software applications may be used.

The computer system 1 may comprise **one or more control elements 20** for controlling the computer system 1 and/or the orchestrated environment 10. In particular, the one or more control elements 20 may comprises an orchestration control element for controlling the orchestrated. The one or more control elements 20 may be software executed by the computer system 1.

The computer system 1 may comprise **one or more software monitor units 40.** The one or more software monitor units 40 may be software executed by the computer system 1. The one or more software monitor units 40 may be arranged to monitor, detect, and/or handle incorrect execution of the orchestrated environment 10, such as incorrect execution of the software application 12. For example, the one or more software monitor units 40 may be represented by one or more control loops, such as a first control loop and a second control loop. The first control loop may monitor incorrect execution of the software application 12, and the second control loop may trigger a restart of the at least part of the orchestrated software environment 10 and/or the at least part of the computer system 1 when the first control loop has monitored incorrect execution by more than a set threshold.

The computer system 1 may comprise one or more processing units, e.g., respectively comprising any suitable processing means such as a processor. The one or more processing units may comprise a **first processing unit 31** and/or a **second processing unit 32.** The one or more processing units, e.g., the first processing unit 31 and/or the second processing unit 32, may be respective processor(s). Embodiments herein may be executed by any one or more of the one or more processing units, e.g., by being distributed thereon in any suitable manner. In other words, any one or more of the orchestrated software environment, the virtual container 11, and the software application 12, may be distributed over any one or more of the one or more processing units. Distributing execution of different containers, monitors, control elements, and software applications may reduce risk of entities executing incorrectly at the same time.

The computer system 1 may further be arranged with suitable hardware and/or software.

Embodiments herein may relate to monitoring and evaluating correctness of the orchestrated software environment 10, in particular relating to the software application 12. If too many incorrect executions are monitored, e.g., more than a set threshold, at least part of the orchestrated software environment 10 and/or at least part of the computer system 1 may be restarted.

In some embodiments, the software application 12 may not be not monitored from outside the computer system 1. The software application 12 may be configured to actively report its state to a monitor, e.g., of the one or more software monitors 40.

**FIG.** 2 illustrates a flow chart of a method performed by the computer system 1 for handling the orchestrated software environment 10 according to some embodiments. As discussed above, the computer system 1 is comprised in the spacecraft 100. The method herein may be particularly aimed at mitigating problems relating to radiation causing incorrect execution of the orchestrated software environment 10 such as the software application 12. The method and embodiments herein may additionally alleviate residual design errors such as latent, hidden, or sleeping errors.The method may be performed by any suitable processing means of the computer system 1 such as the one or more processing units. In some embodiments, the software application 12 is executed at least partly by the first processing unit 31 of the computer system 1. At lest partly as used herein may mean that while the first processing unit 31 may solely execute the software application 12, the software application 12 may also be distributed and executed by multiple processing units. The method herein may be executed by a different processing unit as the software application 12, such as executed at least partly by the second processing unit 32 of the computer system 1. The method may comprise any one or more of the following Actions, in any suitable order. Dashed boxes in FIG.2 may indicate optional actions.

**Action 201.** The computer system 1 monitors the orchestrated software environment 10. The computer system 1 may monitor the orchestrated software environment 10 for incorrect execution of the orchestrated software environment 10. In particular, the computer system may monitor the software application 12 for incorrect execution but may additionally or alternatively monitor for incorrect execution which appear outside and/or beyond the scope of the software application 12 and/or its virtual container 11. In other words, the computer system 1 may monitor the orchestrated software environment 10 by monitoring the software application 12 executing as part of the virtual container 11 of the orchestrated software environment 10.

In some embodiments, monitoring the correctness of the execution of the software application 12 comprises the computer system 1 monitoring at least one of:
- an execution path of the software application 12,
- data produced by the software application 12, and
- one or more side-effects of executing the software application 12.

Monitoring the orchestrated software environment 10 may comprise monitoring an activity associated with the orchestrated software environment 10 and/or an activity associated with the software application 12 executing as part of the virtual container 11 of the orchestrated software environment 10.

In some embodiments, the computer system 1 monitor whether or not the orchestrated software environment 10 performs any activity. Additionally, or alternatively, the computer system 1 monitor whether or not a life signal of the orchestrated software environment 10 and/or the software application 12 can be detected.

Monitoring the correctness of the orchestrated software environment 10 may be performed by the one or more software monitor units 40 of the computer system 1, e.g., as part of iterating a first control loop.

The computer system 1 may be configured to monitor the orchestrated software environment 10 by using the one or more monitoring units 40, to monitor software applications of the orchestrated software environment 10. The software applications of the orchestrated software environment 10, e.g., the software application 12, may be configured to provide states, e.g., predefined states, to the one or more monitoring units 40, such that they can be evaluated for correctness. The states may need to be provided within a set predefined time period, also referred to as a deadline.

**Action 202.** The computer system 1 evaluates a correctness of execution of the orchestrated software environment 10. The evaluation of correctness of execution of the orchestrated software environment 10 may be performed during monitoring of the orchestrated software environment 10, as in action 201.

In particular, the computer system 1 may evaluate a correctness of execution of the software application 12 but may additionally or alternatively evaluate correctness outside and/or beyond the scope of the software application 12 and/or its virtual container 11. In other words, the computer system 1 may evaluate the correctness of execution of the orchestrated software environment 10 comprises evaluating the correctness of execution of the software application 12.

In some embodiments, evaluating the correctness of the execution of the software application 12 comprises the computer system 1 evaluating at least one of:
- an execution path of the software application 12,
- data produced by the software application 12, and
- one or more side-effects of executing the software application 12.

In some embodiments, evaluating the correctness of the execution of the software application 12 by evaluating the execution path of the software application 12 may comprise evaluating whether or not the execution path of the software application 12 corresponds to a reference execution path. The reference execution path may typically be a predefined execution path. The correctness may be evaluated by checking whether or not the software application 12 has reached certain parts of its execution path, e.g., executed certain parts of code. In some embodiments, evaluating whether or not the execution path of the software application 12 corresponds to a reference execution path comprises evaluating whether or not one or more states of the reference execution path have been reached. The states may be any suitable representation of that the software application 12 has executed certain parts of the reference execution path. In some embodiments, state as used herein may for example mean instruction and/or function to execute and/or may also consider a context of the application 12. A possibility is that the application reports certain predefined identifiers, e.g., predefined by the reference execution path, such as checksums to the one or more monitors when reaching certain points in the execution, however, implementation can vary in any suitable manner. In some embodiments, e.g., when order is of importance which is sometimes the case for some applications, evaluating whether or not the execution path of the software application 12 corresponds to the reference execution path may further comprise evaluating whether or not the one or more states have been reached with regards to an order indicated by the reference execution path. The one or more states may respectively represent a point of the reference execution path that is reached before a given deadline. A user may, along the execution path, send identifiers, e.g., certain number of "tokens", string of numbers and/or letters, before the deadline of each part of the reference execution path. As an example, a token may need to be sent before 100 milliseconds of execution have passed. In this way, developers may be able to call a function of the software application 12 code to send that token somewhere in their code along the execution path before 100 ms has passes. The same may apply for each token of the reference execution path. While this is one example implementation of evaluation using an execution pat, many more may apply. **In** embodiments herein, ordered and unordered checks of state may be claimed, i.e., the software application 12 may or may not need to progress in certain orders, i.e., in some scenarios and/or parts of the software application 12, concurrency may be allowed while for some scenarios and/or parts of the software application 12, sequential execution of the code may be necessary for correct execution.

In some embodiments, evaluating the correctness of the execution of the software application 12 by evaluating the data produced by the software application 12 comprises comparing data produced by the software application 12 with reference data and/or one or more reference criteria for the produced data. The data may be results from calculations performed by the software application 12. The reference data may be expected results to be produced by the software application 12. The one or more reference criteria may comprise an expected range of the data. Additionally, or alternatively the one or more reference criteria may comprise error margins for how much the data can differ from the reference data. In space, non exact values are often used where a lot of variation may be present, hence, the need for error margins and/or the one or more reference criteria. A lot of variation may be present and ranged / error margins may be accounted for. The data of embodiments herein may be any data needed for operating the spacecraft 100 and/or which are measured by the spacecraft 100 for third-party purposes, e.g., research. The data may for example comprise at least one of: voltage, current, temperature, pressure, and radiation.

In some embodiments, evaluating the correctness of the execution of the software application 12 by evaluating the one or more side-effects of executing the software application 12 comprises evaluating whether or not the one or more side-effects of executing the software application 12 correspond to one or more restricted side-effects. Side-effects of the software application 12 may relate to any aspect is not directly functional of the software application 12, i.e., an effect beyond the scope of an input of a function leading to an output such as input/output, system calls, usage of peripheral devices, file management, etc. In some embodiments, the one or more restricted side-effects comprise at least one of:
- restricted communication input and/or output, e.g., certain communication and/or certain data links and/or certain communication protocols may not be allowed to use or may only be used to a certain extent and/or in a certain context, and
- restricted one or more system calls, e.g., input from a user may not be allowed, file management may not be allowed, operating system commands may not be allowed, etc.

Evaluating the correctness of execution of the orchestrated software environment 10 may comprise evaluating the monitored activity, e.g., as discussed in action 201. The activity may be predefined such that the correctness may be known or at least some aspects of the correctness may be possible to evaluate based on information regarding the activity. As an example, specific sequences of onboard payloads of the spacecraft 100 may be part of such activities, e.g., controlled by the computer system 1, such as cameras or other imaging equipment must be cooled down to certain temperature and/or establish right focus before usage.

In some embodiments, the computer system 1 evaluates correctness by evaluating whether or not the orchestrated software environment 10 performs any activity. Additionally, or alternatively, the computer system 1 evaluated correctness of execution based on whether or not the monitored life signal can be detected.

Evaluating the correctness of the orchestrated software environment 10 may be performed by the one or more software monitor units 40 of the computer system 1, e.g., as part of iterating the first control loop.

The computer system 1 may be configured to evaluate the orchestrated software environment 10 by evaluating whether or not the one or more monitoring units 40, have received the correct states from the monitored applications, e.g., within the correct time period.

Evaluating the correctness of execution of the orchestrated software environment 10 may comprise logging the number of times that the orchestrated software environment 10 has executed incorrectly.

**Action 203.** When the orchestrated software environment 10 has executed incorrectly by less times than or equal to a set threshold, triggering a restart of the virtual container 11 of the software application 12 and/or the software application 12. In this way, minor issues may be handled by restarting the virtual container 11 and/or the software application 12, while significant issues with more likelihood of problems may be handled as per Action 204 below. The restart triggered by Action 203 may be triggered by every incorrect execution and/or every second and/or every third incorrect execution.

**Action 204.** When the orchestrated software environment 10 has executed incorrectly by more than a set threshold, the computer system 1 triggers a restart of at least part of the orchestrated software environment 10 and/or at least part of the computer system 1. Thus, when the orchestrated software environment has executed incorrectly a number of times, when the number of times is above the set threshold, the restart is triggered. The restart may be the entire orchestrated software environment 10 and/or the entire computer system 1. Alternatively, the restart may be of predefined entities of the orchestrated software environment 10 and/or the computer system 1. Alternatively, the restart may be of entities of the orchestrated software environment 10 and/or the computer system 1 which are associated with and/or affected by the monitored incorrect execution. Restarting at least part of the computer system 1 may comprise restarting one or more of the one or more processing units, e.g., the first processing unit 31 and/or second processing unit 32.

In embodiments herein, the set threshold may be predefined. The set threshold may be set such that triggering the restart of at least part of the orchestrated software environment 10 and/or at least part of the computer system 1 happens only if incorrect execution has happened multiple times. The set threshold may often be application-specific, but as an example, the set threshold may be set to 1, 2, 3, 4, 5, 6, 7, 8, 9 or 10 incorrect executions.

In some embodiments, triggering the restart of the at least part of the orchestrated software environment 10 and/or the at least part of the computer system 1 is performed by the one or more software monitoring units 40 as part of the second control loop. The second control loop may be triggered to be performed when the orchestrated software environment 10 has executed incorrectly by more than the set threshold.

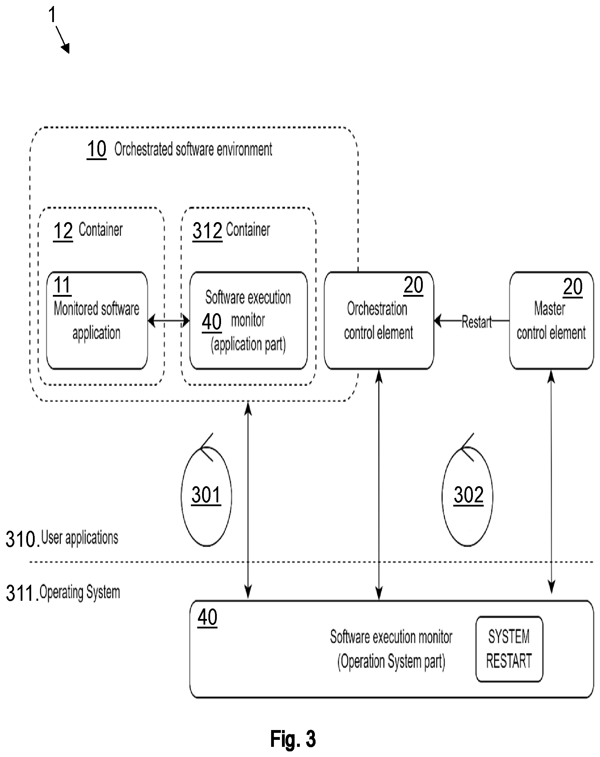

**FIG. 3** illustrates an example scenario of embodiments herein and may be a concrete example of the method described above.

Monitoring the execution correctness of the user application may, as discussed above, comprise or consist of two control loops, the first control loop, illustrated in FIG 3 as the **first control loop 301** and the second control loop illustrated in FIG. 3 as the **second control loop 302.** The control loops 301, 302 may be arranged to monitor the software application 12 executing as part of **user applications 310** in the context of the orchestrated software environment 10. The second control loop 302 may be configured to monitor the execution of an orchestration control element as part of the one or more control elements 20 of the orchestrated software environment 10.

The computer system 1 may execute the control loops 301, 302, e.g., as part of an **operating system 311** and/or in user space, i.e., as part of the user applications 310.

The software application 12 may not be monitored from outside the orchestrated software environment 10 and may instead be monitored by the one or more monitor units 40, e.g., as part of the orchestrated software environment 10 in a **second virtual container 312** and/or as part of the operating system. The software application 12 may be actively reporting its state to the one or more monitors 40. Embodiments herein may comprise, e.g., as part of Action 201 or 202, counting the number of failures of monitored user applications such as by the user application 12 and may comprise restarting containers 11, 312, the orchestrated environment 10, and, at last, the computer system 1 depending on the number of times incorrect execution has been monitored.

Potential failures in the correct execution of the software application 12 may first be detected by the first control loop 301. According to a system configuration, e.g., indicating the set threshold, single occurrences of such failures may be tolerated i.e., transient errors or treated by notifying an orchestration control element by a master control element to restart the container with the failing monitored software application, i.e., the software application 12, e.g., as part of Action 203 as discussed above with reference to FIG. 2. The orchestration control element and/or the master control element may be executed by the computer system 1 and may be part of the one or more control elements 20.

After a pre-configured number of occurrences, e.g., the set threshold, multiple failures in the execution of the monitored software application 12 may be propagated to the second control loop 302, which may either restart the entire orchestrated software environment 10 or restart the computer system 1 itself, e.g., as part of Action 204.

System configuration may dictate how many restarts of the orchestrated software environment 10 are critical and shall result in a complete system restart.

In embodiments herein, the software application 12 may be monitored for the correctness of its execution. Any one or more of the following three aspects may judge the correctness of execution:
1 . The execution of a binary software code of the software application 12 follows a predetermined execution path.
2. The results, e.g., numerical results, of software execution of the software application 12 are range-checked, i.e., are within predefined intervals.
3. The execution of software application 12 does not have unintended side effects, e.g., the user application 12 shall not initiate unannounced and/or unconfigured communication over a data link.

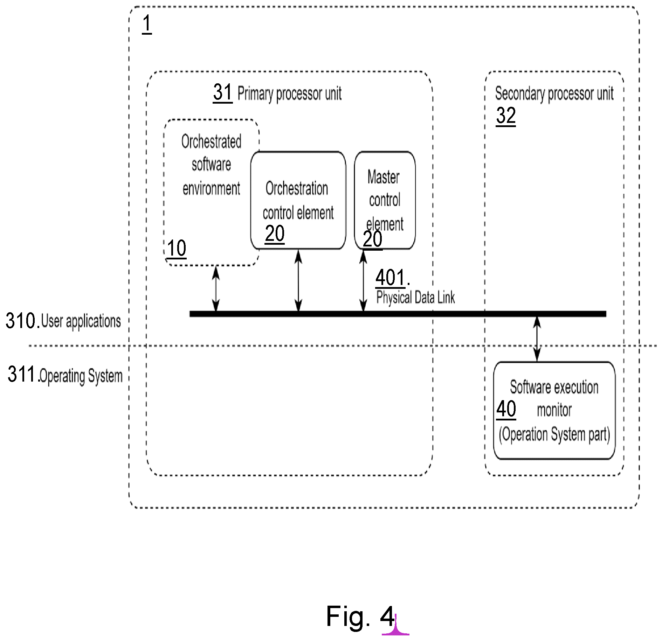

**FIG. 4** illustrates an example scenario which may be seen as an optional extension to any of the embodiments herein. Most embodiments herein may be for execution on a single physical processor unit. However, the operating system of the computer system 1, e.g., part of the presented monitoring method as seen in FIG. 3, may be influenced by space radiation in the same way as the user applications running on the same physical processor unit, in this example, the first processing unit 31. Therefore, additionally or alternatively to embodiment above, it may be useful to perform the monitoring and/or evaluation at least partly using a second physical processor unit, in this example, the second processing unit 32.

The extension to the proposed monitoring method comprises that a communication layer over **a data link 401** between the first processing unit 31 and the second processing unit 32. While the software application 12 of the monitored orchestrated software environment 10 and the master control element 20 is executed on the firs processing unit 31, the operating system part may be executed on the second processing unit 32 located on the same physical system i.e., the computer system 1. The second processing unit 32 may need to be capable of restarting the complete computer system 1, including the first processing unit 31, e.g., as part of action 204. While the failure such as multiple incorrect execution due to radiation of software execution on a single processing unit is probable in a harsh environment like space, a simultaneous failure of software executing on two physically separate processing units is only remotely probable. It may further be envisioned that more than one processing unit can be used for the monitoring, e.g., by having the one or more monitoring units 40 on multiple different processing units, e.g., if the harsh conditions requires so.

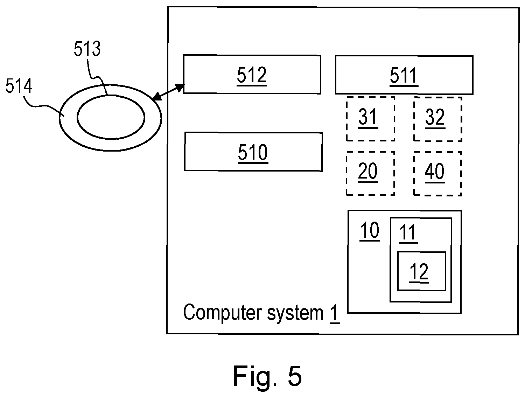

**FIG. 5** illustrates an example of the computer system 1 according to some embodiments. As discussed above, the computer system 1 is comprised in the spacecraft 100. As discussed above, the computer system 1 may be configured to operate in the spacecraft 100 in particular when the spacecraft 100 is arranged in space, e.g., in orbit around Earth. Several embodiments are comprised herein. It should be noted that the examples and embodiments herein are not mutually exclusive. One or more embodiments may be combined, where applicable. The computer system 1 may comprise an **input and output interface 510.** The input and output interface 510 may comprise a receiver, e.g. wired and/or wireless, (not shown) and a transmitter, e.g. wired and/or wireless, (not shown), e.g., for communication with the computer system 1 and/or the spacecraft 100.

The embodiments herein, in particular as discussed below, may be implemented through a **processing circuitry 511** comprised in the computer system 1, and as depicted in Fig. 5, e.g., together with computer program code for performing the functions and actions of the embodiments herein. The processing circuitry 511 may comprise any suitable processing means such as the one or more processing units, e.g., the first processing unit 31 and/or the second processing unit 32. Any one or more embodiments herein, such as the method above, may be performed by the processing circuitry 511.

The computer system 1 is configured to handle the orchestrated software environment 10. The computer system 1 is configured to monitor the orchestrated software environment 10. The computer system 1 is configured to evaluate a correctness of execution of the orchestrated software environment 10. The computer system 1 is configured to: when the orchestrated software environment 10 has executed incorrectly by more than a set threshold, trigger a restart of at least part of the orchestrated software environment 10 and/or at least part of the computer system 1.

The computer system 1 may be configured to monitor the orchestrated software environment 10 by monitoring the software application 12 executing as part of the virtual container 11 of the orchestrated software environment 10. The computer system 1 may be configured to evaluate the correctness of execution of the orchestrated software environment 10 by evaluating a correctness of execution of the software application 12. The computer system 1 may be configured to evaluate the correctness of the execution of the software application 12 by evaluating at least one of: an execution path of the software application 12, data produced by the software application 12, and one or more side-effects of executing the software application 12.

In some embodiments, evaluating the correctness of the execution of the software application 12 by evaluating the execution path of the software application 12 comprises evaluating whether or not the execution path of the software application 12 corresponds to a reference execution path. In some embodiments, evaluating whether or not the execution path of the software application 12 corresponds to a reference execution path comprises evaluating whether or not one or more states of the reference execution path have been reached. In some embodiments, evaluating the correctness of the execution of the software application 12 comprises evaluating whether or not the one or more states have been reached with regards to an order indicated by the reference execution path.

The computer system 1 may be configured to evaluate the correctness of the execution of the software application 12 by evaluating the data produced by the software application 12 comprises comparing data produced by the software application 12 with reference data and/or one or more reference criteria for the produced data.

The computer system 1 may be configured to evaluate the correctness of the execution of the software application 12 by evaluating whether or not the one or more side-effects of executing the software application 12 correspond to one or more restricted side-effects.

In some embodiments, the one or more restricted side-effects comprise at least one of:
- restricted communication input/output, and
- restricted one or more system calls .

The computer system 1 may be configured to, when the software application 12 has executed incorrectly less times than or equal to the set threshold, trigger a restart of the virtual container 11 of the software application 12 and/or the software application 12.

The software application 12 may be executed at least partly by the first processing unit 31 of the computer system 1. The method discussed above, e.g., any one or more of actions 201-204, may be executed at least partly by the second processing unit 32 of the computer system 1.

The computer system 1 may be configured to monitor the orchestrated software environment 10 by monitoring an activity associated with the orchestrated software environment 10 and/or an activity associated with the software application 12 executing as part of the virtual container 11 of the orchestrated software environment 10. The computer system 1 may be configured to evaluate a correctness of execution of the orchestrated software environment 10 by evaluating the monitored activity.

The computer system 1 may be configured to monitor and/or evaluate the correctness of the orchestrated software environment 10 by the one or more software monitor units 50 of the computer system 1, e.g., as part of iterating the first control loop 301.

The computer system 1 may be configured to trigger the restart of the at least part of the orchestrated software environment 10 and/or the at least part of the computer system 1, e.g., by the one or more software monitoring units 50, e.g., as part of the second control loop 302. The second control loop 302 may be triggered to be performed when the orchestrated software environment 10 has executed incorrectly by more than the set threshold.

The computer system 1 may further comprise respective a **memory 512** comprising one or more memory units. The memory 512 comprises instructions executable by the processing circuitry 511 in the computer system 1.

The memory 512 may be used to store instructions, data, configurations, references, and applications to perform the methods herein when being executed in the computer system 1.

The computer system 1 may comprise the processing circuitry 511 and the memory 512. Said memory 512 may comprise instructions executable by said processing circuitry 511 whereby said computer system 1 is operative to perform any of the methods herein.

In some embodiments, a **computer program 513** which may also be referred to as a computer program product, may comprise instructions, which, when executed on the computer system 1 such as the processing circuitry 511, may cause the computer system 1 such as the processing circuitry 511 to carry out the method according to any of the above-mentioned embodiments.

In some embodiments, **a computer-readable storage medium 514** is comprised in the computer system 1. The storage medium 514 may have stored thereon a computer program, e.g., the program 513, which comprises instructions which, when executed by the computer system 1 such as the processing circuitry 511, cause the computer system 1 such as the processing circuitry 511 to carry out the method according to any of the above-mentioned embodiments.

The processing circuitry 511 may be configured to execute program code, e.g., the program 513, stored in memory such as the memory 512 and/or storage medium 514, which may include one or several types of memory such as read-only memory (ROM), random-access memory (RAM), cache memory, flash memory devices, optical storage devices, etc. Program code stored in memory includes program instructions for executing protocols and/or actions for the spacecraft 100.

Any of the entities of the computer system 1 and/or the spacecraft 100 may be understood herein as any suitable hardware component. As used herein, the expression "in some embodiments" has been used to indicate that the features of the embodiment described may be combined with any other embodiment or example disclosed herein. When using the word "comprise" or "comprising", it shall be interpreted as non- limiting, i.e., meaning "consist at least of". The embodiments herein are not limited to the above-described preferred embodiments. Various alternatives, modifications and equivalents may be used. Therefore, the above embodiments should not be taken as limiting the scope of the invention.

## Claims

1. A method performed by a computer system (1) comprised in a spacecraft (100) for handling an orchestrated software environment (10), the method comprising:
- monitoring (201) the orchestrated software environment (10) and evaluating (202) a correctness of execution of the orchestrated software environment (10), comprising logging a number of times that the orchestrated software environment (10) has executed incorrectly,
- distributing monitoring (201) and evaluating (202) in the orchestrated software environment (10); and
- when the number of times the orchestrated software environment (10) has executed incorrectly is above a set threshold, wherein said set threshold is a predetermined number of times the orchestrated software environment (10) has executed incorrectly, triggering (204) a restart of at least part of the orchestrated software environment (10) and/or at least part of the computer system (1).

2. The method of claim 1, wherein monitoring (201) the orchestrated software environment (10) comprises monitoring a software application (12) executing as part of a virtual container (11) of the orchestrated software environment (10), and wherein evaluating (202) the correctness of execution of the orchestrated software environment (10) comprises evaluating a correctness of execution of the software application (12), and preferably, wherein evaluating (202) the correctness of the execution of the software application (12) comprises evaluating at least one of:
- an execution path of the software application (12),
- data produced by the software application (12), and
- one or more side-effects of executing the software application (12).

3. The method of claim 2, wherein evaluating (202) the correctness of the execution of the software application (12) by evaluating the execution path of the software application (12) comprises evaluating whether or not the execution path of the software application (12) corresponds to a reference execution path, and preferably, wherein evaluating whether or not the execution path of the software application (12) corresponds to a reference execution path comprises evaluating whether or not one or more states of the reference execution path have been reached, and preferably evaluating whether or not one or more states have been reached with regards to an order indicated by the reference execution path.

4. The method of any of claims 2-3, wherein evaluating (202) the correctness of the execution of the software application (12) by evaluating the data produced by the software application (12) comprises comparing data produced by the software application (12) with reference data and/or one or more reference criteria for the produced data.

5. The method of any of claims 2-4, wherein evaluating (202) the correctness of the execution of the software application (12) by evaluating the one or more side-effects of executing the software application (12) comprises evaluating whether or not the one or more side effects of executing the software application (12) correspond to one or more restricted side-effects, and preferably wherein the one or more restricted side-effects comprise at least one of:
- restricted communication input/output, and
- restricted one or more system calls.

6. The method of any of claims 2-5, further comprising: when the software application (12) has executed incorrectly less times than or equal to the set threshold, triggering (203) a restart of the virtual container (11) of the software application (12) and/or the software application (12).

7. The method of any of claims 2-6, wherein the software application (12) is executed at least partly by a first processing unit (31) of the computer system (1) and wherein the method is executed at least partly by a second processing unit (32) of the computer system (1).

8. The method of any of claims 1-7 wherein monitoring (201) the orchestrated software environment (10) comprises monitoring an activity associated with the orchestrated software environment (10) and/or an activity associated with a software application (12) executing as part of a virtual container (11) of the orchestrated software environment (10), and wherein evaluating (202) the correctness of execution of the orchestrated software environment (10) comprises evaluating the monitored activity.

9. The method of any of claims 1-8, wherein monitoring (201) and evaluating (202) the correctness of the orchestrated software environment (10) is performed by one or more software monitor units (40) of the computer system (1) as part of iterating a first control loop, and wherein triggering (204) the restart of the at least part of the orchestrated software environment (10) and/or the at least part of the computer system (1) is performed by the one or more software monitoring units as part of a second control loop, 30 and wherein the second control loop is triggered to be performed when the orchestrated software environment (10) has executed incorrectly by more than a set threshold.

10. A computer system (1) comprised in a spacecraft (100) configured to handle an orchestrated software environment (10), the computer system (1) comprising one or more processing units (31, 32), wherein said computer system (1) is configured to:
- monitor the orchestrated software environment (10),
- evaluate a correctness of execution of the orchestrated software environment (10) comprising logging a number of times that the orchestrated software environment (10) has executed incorrectly,
- wherein monitoring and evaluating is distributed over said one or more processing units (31, 32); and
- when the number of times the orchestrated software environment (10) has executed incorrectly is above a set threshold, wherein said set threshold is a predetermined number of times the orchestrated software environment (10) has executed incorrectly, trigger a restart of at least part of the orchestrated software environment and/or at least part of the computer system (1).

11. The computer system (1) of claim 10 configured to perform the method according to any of claims 1-9.

12. A(10), and wherein evaluating (202) the correctness of execution of the orchestrated software environment (10) comprises evaluating the monitored activity.

13. A computer-readable storage medium (514) comprising instructions which, when executed by a computer system (1), cause the computer system (1) to carry out the method according to any of claims 1-9.

14. A spacecraft (100) comprising the computer system (1) according to claims 10 or 11.
